# EUROPEAN PATENT APPLICATION

(11) **EP 2 615 602 A1**
(43) Date of publication of application: **17.07.2013**
(21) Application number: 11823221.4
(22) Date of filing: 31.08.2011
(51) Int. Cl.: G09G 3/02, G02B 26/10, G02B 27/48

(54) **IMAGE DISPLAY DEVICE**

(30) Priority: 07.09.2010 JP 2010199720
(71) Applicant: Funai Electric Co., Ltd., Daito-shi Osaka 574-0013 (JP)
(72) Inventor: CHIKAOKA, Atsuhiko, Daito-shi Osaka 574-0013 (JP)
(74) Representative: Grünecker, Kinkeldey, Stockmair & Schwanhäusser
(86) International application number: PCT/JP2011/004878
(87) International publication number: WO 2012/032740

(57) **Abstract**

Provided is an image display device which carries out bi-directional line sequence scanning, and which appropriately corrects positioning misalignment of projection spots while efficaciously minimizing speckle noise. A laser controller unit sets waveform patterns when scanning in the forward direction, reflecting waveform patterns (GPT, BPT) about the time axis. The laser controller unit further sets waveform patterns when scanning in the reverse direction, reflecting the waveform patterns when scanning in the forward direction about the time axis. Waveform patterns (RPT, GPT, BPT) comprise drive start timings and drive end timings of laser sources within a pixel display period. The off period from the start timing of the pixel display period to the drive start timing and the off period from the drive end timing to the end timing of the pixel display period are set to be asymmetrical about the time axis.

## Description

### Technical Field

The present invention relates to an image display device which displays an image on a projection plane using scanning laser light.

### Background Art

In Patent Literature 1(PTL 1), a laser projector is disclosed which displays an image on a projection plane by reflecting color light in which respective components of red, blue, and green which are output from three laser light sources are composed, respectively, on a scanning mirror, and projecting on the projection plane. The scanning mirror can be displaced in two axial directions, and displaces a deflection angle of the mirror using a resonant frequency which is inherent in the mirror. In this manner, an image of one frame is displayed on the projection plane when bi-directional line sequential scanning is alternately repeated in which laser spots are progressed in a direction of a certain horizontal line on the projection plane (scanning in forward direction), and the laser spots are returned in the reverse direction on the subsequent horizontal line which is immediately below (scanning in reverse direction). In such a laser projector, due to coherency which is inherent in laser light, minute speckled flickering, which is referred to as speckle noise, becomes a problem. In order to reduce the speckle noise, various methods have been proposed in the related art, and as one of the methods, a method disclosed in PTL 2 whereby a mitigation vibration of the laser light source is used. In this method, a laser light source is driven using a rectangular waveform pattern in which ON and OFF are alternately repeated. The laser light source starts a mitigation vibration at a timing of rising from OFF to ON, and continues the mitigation vibration in the ON period thereafter. The ON period is set to be the same as or less than a time in which the mitigation vibration is converged. Accordingly, it is possible to reduce the speckle noise since an output level of the laser light source unstably fluctuates in the entire region in the ON period, and the coherence of the laser light is reduced.

Meanwhile, in the above described PTL 1, since laser light beams which are output from three laser light sources are composed and made into color light beams, it is preferable that optical axes of each laser light source match one another. However, due to a physical mounting precision of the laser light source or the like, the optical axes of the laser light sources of each of the color components do not completely match one another, and a deviation easily occurs at a projecting position of laser light (position of projection spot) on the projection plane. In order to correct such a position deviation, in PTL 3, a method is disclosed in which the rising time from OFF to ON of the laser light source, that is, a laser light output start timing is adjusted in each color component depending on an amount of the position deviation.

### Citation List

### Patent Literature

[PTL 1] JP-A-2009-175428
[PTL 2] JP-A-2001-189520
[PTL 3] JP-A-06-202017

### Summary of Invention

### Technical Problem

However, in PTL 3 in which the position deviation of the projection spot is corrected in terms of time, merely line sequential scanning in one direction is performed in all of the scanning lines, and applying the bi-directional line sequential scanning which is disclosed in PTL 1 is not considered at all. Here, a case will be considered in which, when performing forward scanning (for example, when performing scanning from left to right), a projection spot of a blue component is deviated in the scanning delay direction (left side) with respect to a projection spot of a red component. In this case, when an output start timing of the blue component in which scanning delay occurs is delayed more than that of the red component, it is possible to reduce the position deviation of the blue component. However, when the output start timing of the blue component is also delayed when performing reverse scanning (when performing scanning from right to left), similarly to the forward scanning, the position deviation of the blue component is further increased. The reason why is that, when performing the reverse scanning, the projection spot of the blue component is deviated in the time forward direction (left side) with respect to the projection spot of the red component, differently from the case of the forward scanning.

Therefore, an object of the present invention is to appropriately correct a position deviation of a projection spot while effectively reducing speckle noise in an image display device which performs bi-directional line sequential scanning. Solution to Problem

In order to solve the problem, a first invention provides an image display device which includes a first laser light source, a second laser light source, a laser scanning unit, and a laser control unit, and displays an image on a projection plane by projecting laser light on the projection plane. The first laser light source outputs first laser light. The second laser light source outputs second laser light to be composed with the first laser light. The laser scanning unit projects the first laser light, and the second laser light on the projection plane by alternately repeating forward scanning, and reverse scanning which is opposite in direction to the forward scanning. The laser control unit sets a driving start timing of the second laser light source of which a projection position is deviated in a scanning delay direction with respect to the first laser light source to be delayed more than a driving start timing of the first laser light source in a pixel display period, when performing the forward scanning, and sets the driving start timing of the second laser light source of which the projection position is deviated in a scanning progress direction with respect to the first laser light source to be earlier than the driving start timing of the first laser light source in the pixel display period, when performing the reverse scanning.

Here, according to the first invention, it is preferable that the laser control unit sets a driving end timing of the second laser light source to be delayed more than that of the first laser light source in the pixel display period when performing the forward scanning, and sets the driving end timing of the second laser light source to be earlier than that of the first laser light source in the pixel display period when performing the reverse scanning.

A second invention provides an image display device which includes a first laser light source, a second laser light source, a laser scanning unit, and a laser control unit, and displays an image on a projection plane by projecting laser light on the projection plane. The first laser light source outputs first laser light. The second laser light source outputs second laser light to be composed with the first laser light. The laser scanning unit projects the first laser light, and the second laser light on the projection plane by alternately repeating forward scanning, and reverse scanning which is opposite in direction to the forward scanning. The laser control unit controls an output level of the first laser light which is output from the first laser light source according to a first waveform pattern in which a first OFF period from a start timing of a pixel display period to a driving start timing of a laser light source, and a second OFF period from a driving end timing of a laser light source to an end timing of the pixel display period are asymmetrically provided on a time axis, and controls an output level of the second laser light which is output from the second laser light source according to a second waveform pattern in which the first waveform pattern is reversed on the time axis, when performing forward scanning, and controls the output level of the first laser light which is output from the first laser light source according to the second waveform pattern, and controls the output level of the second laser light which is output from the second laser light source according to the first waveform pattern, when performing the reverse scanning.

Here, according to the second invention, it is preferable to set a driving current which is supplied to the laser light source to a bias current or less, regardless of displaying a grayscale during the first OFF period and the second OFF period.

In addition, according to the first and second inventions, it is preferable to set a first driving timing from a driving start timing to a driving end timing in the first laser light source to be the same as a second driving timing from a driving start timing to a driving end timing in the second laser light source.

### Advantageous Effects of Invention

According to the first invention, since the first laser light source and the second laser light source have the driving start timing and the driving end timing in the pixel display period in which a display period of one pixel is defined, the mitigation vibration of the laser light source is performed for each pixel. Due to the mitigation vibration, it is possible to reduce the speckle noise since the coherence in the laser light is reduced. In addition, it is possible to reduce the position deviation of the second laser light source in the forward scanning by delaying the driving start timing of the second laser light source of which the projection position is deviated in the scanning delay direction with respect to the first laser light source more than that of the first laser light source, when performing the forward scanning. On the other hand, it is possible to reduce the position deviation of the second laser light source in the reverse scanning by making the driving start timing of the second laser light source of which the projection position is deviated in the scanning progress direction with respect to the first laser light source earlier than that of the first laser light source, when performing the reverse scanning. In this manner, it is possible to appropriately correct the position deviation of the projection spot in both the forward scanning and reverse scanning.

According to the second invention, since the first laser light source and the second laser light source have the driving start timing and the driving end timing in the pixel display period, the mitigation vibration of the laser light source is performed for each pixel. Due to the mitigation vibration, it is possible to reduce the speckle noise since the coherence in the laser light is reduced. In addition, it is possible to control the output level of the first laser light which is output from the first laser light source according to the first waveform pattern in which the first OFF period and the second OFF period are asymmetrically provided on the time axis, and controls the output level of the second laser light which is output from the second laser light source according to the second waveform pattern in which the first waveform pattern is reversed on the time axis, when performing forward scanning, and to make the driving start timing of the laser light source early, or be delayed between the first waveform pattern and the second waveform pattern. Accordingly, it is possible to reduce the position deviation of the projection spot in the forward scanning. On the other hand, when performing the reverse scanning, since the output level of the first laser light which is output from the first laser light source is controlled according to the second waveform pattern, and the output level of the second laser light which is output from the second laser light source is controlled according to the first waveform pattern, the driving start timing of the first and second laser light sources becomes opposite to that in the forward scanning. Accordingly, it is possible to reduce the position deviation of the projection spot in the reverse scanning. In this manner, it is possible to appropriately correct the position deviation of the projection spot in both the forward scanning and reverse scanning.

### Brief Description of Drawings

Fig. 1 is a block diagram which illustrates a configuration of a laser projector according to a first embodiment.
Fig. 2 is a block diagram which illustrates a configuration of a laser control unit according to the first embodiment.
Fig. 3 is a diagram which illustrates an example of a position deviation of a projection spot according to the first embodiment.
Fig. 4 is a diagram which illustrates an image which is displayed on a projection plane according to the first embodiment.
Fig. 5 is a diagram which illustrates a state in which a position deviation in the vertical direction is corrected in a pixel unit according to the first embodiment.
Fig. 6 is a diagram which illustrates a state in which a position deviation in the horizontal direction is corrected in the pixel unit according to the first embodiment.
Fig. 7 is a diagram which illustrates a state of pixels which are displayed on a projection plane when a correction of the position deviation is performed in the pixel unit according to the first embodiment.
Fig. is a diagram which illustrates a state in which the position deviation in the horizontal direction is corrected in the sub-pixel unit according to the first embodiment.
Fig. 9 is an enlarged view of a waveform pattern in a pixel display period according to the first embodiment.
Fig. 10 is a diagram which illustrates a state in which an amount of the position deviation of a projection spot according to the first embodiment is measured.
Fig. 11 is a diagram which illustrates an example of a measurement result using a measuring instrument according to the first embodiment.
Fig. 12 is an enlarged view of a waveform pattern in a pixel display period according to a second embodiment.
Fig. 13 is a diagram which illustrates a relationship between laser light which is displayed on a projection plane and a pixel according to the second embodiment. Description of Embodiments

### (First Embodiment)

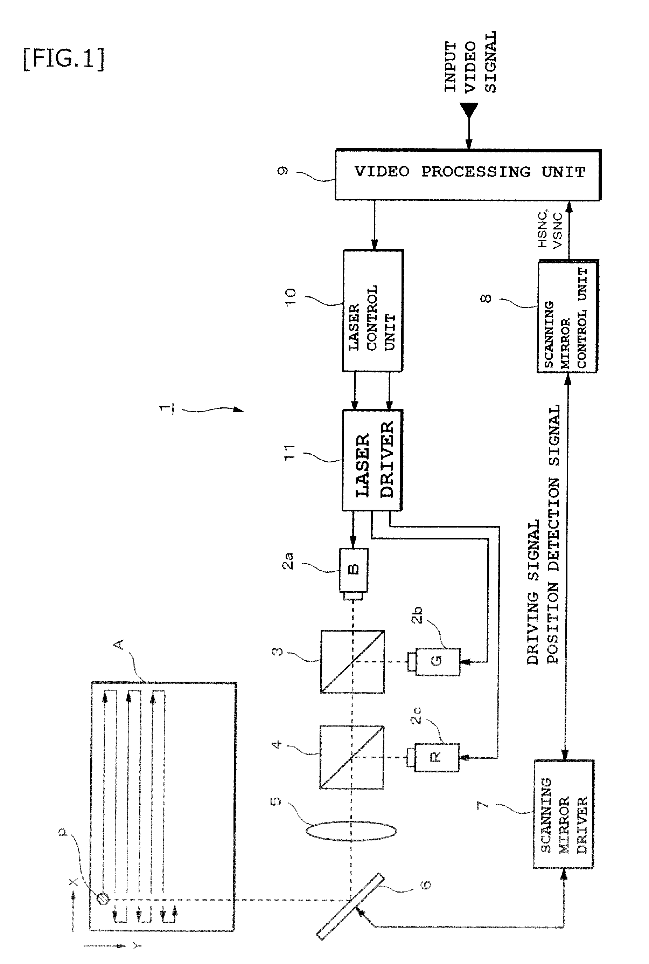

Fig. 1 is a block diagram which illustrates a configuration of a laser projector according to the embodiment. The laser projector 1 is configured mainly by laser light sources 2a to 2c, various optical devices 3 to 5, a scanning mirror 6, and various driving/control units 7 to 11. The laser projector 1 displays a color image corresponding to a video signal on the projection plane A by composing laser light of each color component of red, blue, and green, and then projecting on a projection plane A such as a screen, a wall, or the like. Since the laser projector 1 uses laser light with extremely high directivity, it is remarkably advantageous in that focus adjusting corresponding to a distance to the projection plane A is not necessary.

The respective laser light sources 2a to 2c are separately driven from one another by a driving current which is individually supplied from a laser driver 11. Due to this, laser light with a specified wavelength is output such that a blue component (B) is output from the laser light source 2a, a green component (G) is output from the laser light source 2b, and a red component (R) is output from the laser light source 2c. Dichroic mirrors 3 and 4 compose laser light of each color component which is output from the laser light sources 2a to 2c by transmitting only laser light with a specified wavelength, and reflecting the others. Specifically, the laser light beams of the blue component and green component which are output from the laser light sources 2a and 2b are composed in the dichroic mirror 3 on the upstream side of an optical path, and is output to the dichroic mirror 4 on the downstream side of the optical path. The output composed light is further composed with laser light of red component which is output from the laser light source 2c in the dichroic mirror 4, and is output as targeted final color light. The output color light is input to the scanning mirror 6 as an example of the laser scanning unit through a lens 5.

The scanning mirror 6 projects color light which is input to itself on the projection plane A by reflecting the light according to a deflection angle (phase) of itself. The scanning mirror 6 has a two-dimensional degree of freedom corresponding to the horizontal direction X and the vertical direction Y of the projection plane A, and forms an image on the projection plane A by performing line sequential scanning corresponding to the two-dimensional displacement. The line sequential scanning is continuously performed in one frame by repeating progressing of a laser spot p in one direction on a certain horizontal line on the projection plane A, and returning of the laser spot p in the opposite direction on the subsequent horizontal line. According to the embodiment, the line sequential scanning performs scanning from left to right (forward direction) on a certain horizontal line, and performs scanning from right to left (reverse direction) on the subsequent horizontal line. In addition, in contrast to this, the forward direction may set to the direction from right to left, and the reverse direction may set to the direction from left to right. There are several types of scanning mirror 6 according to a method of driving thereof, and any type can be used. As a type, a mirror in which MEMS (Micro Electro Mechanical Systems) is used is easily available, and is advantageous in downsizing of the whole device, reducing power consumption, and high-speed processing. A schematic operation principle of scanning of the mirror using electromagnetic driving is as follows. A mirror which reflects laser light is attached to a board through two rotation axes which are orthogonal to each other. When a driving current flows in a coil for horizontal scanning, an electromagnetic force is generated between the coil and a permanent magnet corresponding to the coil, and the mirror which is attached to the board swings along one rotation axis (horizontal scanning) due to the electromagnetic force. In addition, when a driving current flows in a coil for vertical scanning, an electromagnetic force is generated between the coil and a separate permanent magnet corresponding to the coil, and the mirror which is attached to the board swings along the other rotation axis (vertical scanning) due to the electromagnetic force. The driving current for horizontal scanning or vertical scanning has an inherent resonance frequency which is specified by a dimension of the mirror, a density of material, hardness, or the like, and the mirror continuously swings with the largest deflection angle by two-dimensionally displacing the mirror using the resonance frequency. In addition, since details of an electromagnetic drive type mirror is disclosed in JP-A-2009-258321, please refer to them, if necessary. In addition, among the electromagnetic drive type mirrors, there is a type in which only the horizontal scanning is performed in the resonance frequency driving, the vertical scanning is performed in DC driving (driving in which phase is controlled using level of current), and the type may be used as the scanning mirror 6.

A scanning mirror driver 7 drives the scanning mirror 6 by supplying a driving current to the scanning mirror 6. In addition to this, the scanning mirror driver 7 detects a current position (phase) of the scanning mirror 6. A scanning mirror control unit 8 is informed with the detected position information as a position detection signal. The position detection of the scanning mirror 6 can be performed, for example, by providing a torsion sensor to the rotation axis (two axes) which is connected between the above described mirror and the board, and detecting an angle of torsion of the rotation axes which is interlocked with the deflection angle of the mirror using the torsion sensor. In addition, the position of the scanning mirror 6 may be detected by arranging a light receiving element (photodiode, or the like) in the vicinity of the scanning mirror 6, and detecting a position of reflected light which is interlocked with the deflection angle of the mirror using the light receiving element.

The scanning mirror control unit 8 controls the scanning mirror 6 so that laser light which is input to the scanning mirror 6 performs scanning a predetermined image area using a predetermine frequency. This control is performed when the scanning mirror control unit 8 outputs a driving signal to the scanning mirror driver 7. In addition, the scanning mirror control unit 8 generates a horizontal synchronizing signal HSNC and a vertical synchronizing signal VSNC based on the position detection signal from the scanning mirror driver 7, and outputs these signals to a video processing unit 9. Laser light output timings from the laser light sources 2a to 2c are necessary to be performed in synchronization with a phase control of the scanning mirror 6, and the horizontal synchronizing signal HSNC or the vertical synchronizing signal VSNC is used in order to obtain the synchronization. That is, in the laser projector 1, driving of the scanning mirror 6 is mainly performed, and driving of the laser light sources 2a to 2c is performed in a driven manner so as to synchronize with the driving of the scanning mirror 6 based on the horizontal synchronizing signal HSNC or the vertical synchronizing signal VSNC which is internally generated.

The video processing unit 9 performs writing of an input video signal (video data) which is supplied form an external device in a frame buffer (not shown) frequently at a timing which is defined by the synchronizing signal which is supplied from the external device. In addition, the video processing unit 9 sequentially reads out the video data which is stored in the frame buffer at a timing which is defined by the horizontal synchronizing signal HSNC or the vertical synchronizing signal VSNC which is supplied from the scanning mirror control unit 8, and transmits to a laser control unit 10.

The laser control unit 10 determines a driving current Id relating to respective pixels, and a waveform pattern PT to be applied thereto in each color component based on the video data items which are sequentially transmitted from the video processing unit 9. The respective laser light sources 2a to 2c are separately controlled or driven through a laser driver 11 based on the driving current Id, and the waveform pattern PT which are set in each color component.

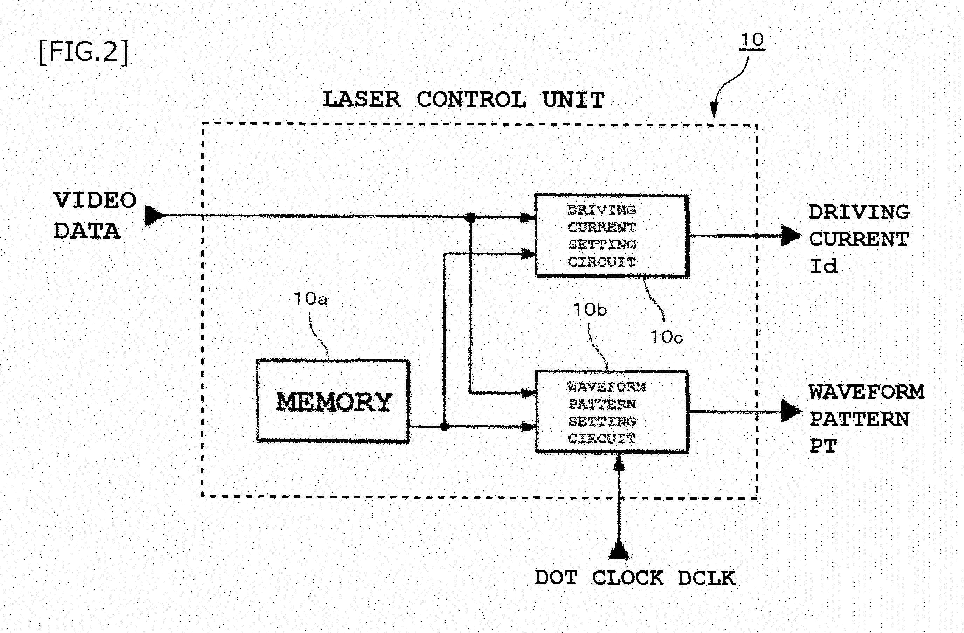

Fig. 2 is a block diagram which illustrates a configuration of a laser control unit 10. The laser control unit 10 includes a memory 10a, a waveform pattern setting circuit 10b, and a driving current setting circuit 10c. The memory 10a stores various information which is used in the laser control unit 10, and in particular, information in which the waveform pattern is defined in each color component. The waveform pattern setting circuit 10b sets the waveform pattern PT for outputting laser light to the laser light sources 2a to 2c based on the video data which is input from the external device, and the information which is read out from the memory 10a. The driving current setting circuit 10c generates and outputs the driving current Id corresponding to a grayscale data D to be displayed with reference to the information which is read out from the memory 10a, and a driving current table which is prepared in each color component. A current level to be set in respective grayscales are written in the driving current table, and the driving current Id corresponding to the grayscale data D to be displayed is primarily specified by referring to the table. As described above, the driving current Id which is specified in each color component of a certain pixel, and the waveform pattern PT are output to the laser driver 11 at a start timing of a display period of the pixel.

The laser driver 11 modulates the driving current Id using waveform pattern PT which is output from the laser control unit 10 with respect to the respective color components, and outputs the modulated driving current to the laser light sources 2a to 2c. In this manner, the laser light sources 2a to 2c output laser light beams with output levels corresponding to grayscales to be displayed according to the waveform pattern PT. The final color light in which output light of each of color components is composed is guided to the scanning mirror 6 of which the position is controlled by being synchronized with the output of the laser light, and is projected on a desired pixel position on the projection plane A.

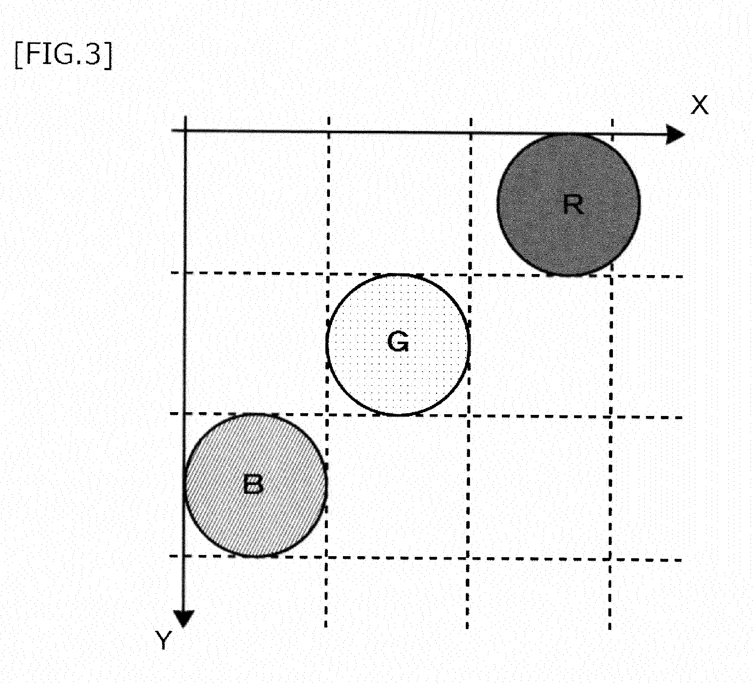

Fig. 3 is a diagram which illustrates an example of a position deviation of a projection spot. There is a case in which the optical axes of the laser light sources 2a to 2c do not completely match one another, and deviation occurs at a position of the projection spot due to physical mounting precision of the laser light sources 2a to 2c, or the like. In the example in the figure, the laser light B has position deviations of -1 pixel in the horizontal direction X, and +1 pixel in the vertical direction Y with respect to the laser light G, and the laser light R has position deviations of approximately + 1.2 pixel in the horizontal direction X, and -1 pixel in the vertical direction Y with respect to the laser light G.

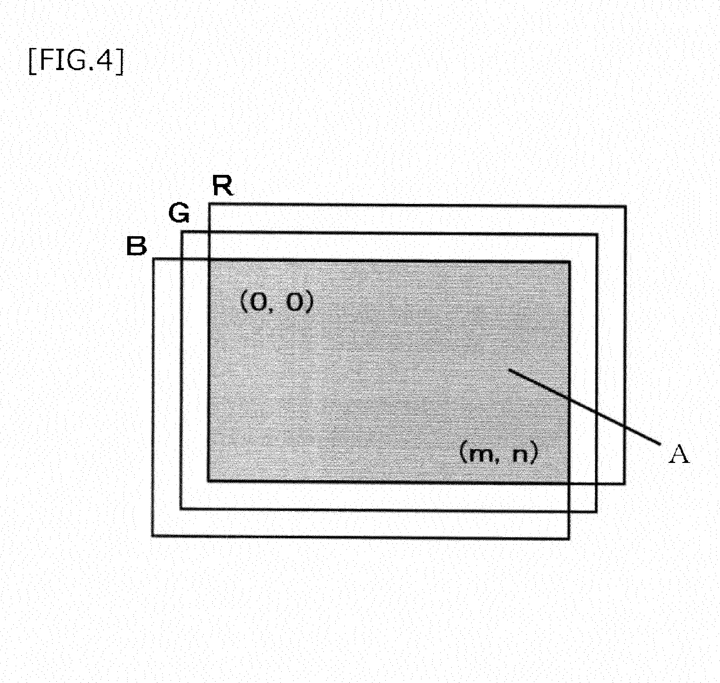

Fig. 4 is a diagram which illustrates an image which is displayed on a projection plane. Since a positional relationship among projection spots of each color component is unchangeable, the position deviation is a position deviation of one frame image which is displayed on the projection plane A by the line sequential scanning, and is directly connected to degradation of an image quality. In order to suppress such degradation of an image quality, the laser control unit 10 individually sets the waveform pattern PT which modulates the driving current Id in each color component, and corrects a relative position deviation of projection spots among color components. Specifically, pixel correction data for correcting the position deviation of the projection spot in a pixel unit, and sub-pixel correction data for correcting the position deviation of the projection spot in a sub-pixel unit with smaller resolution than one pixel are stored in the memory 10a. The laser control unit 10 sets the driving current Id corresponding to a grayscale to be displayed, and the waveform pattern PT to be applied to the modulation of the driving current Id based on the video data, and the information which is read out from the memory 10a. Hereinafter, the correction of the position deviation in the pixel unit based on the pixel correction data, and the correction of the position deviation in the sub-pixel unit based on the sub-pixel correction data will be separately described.

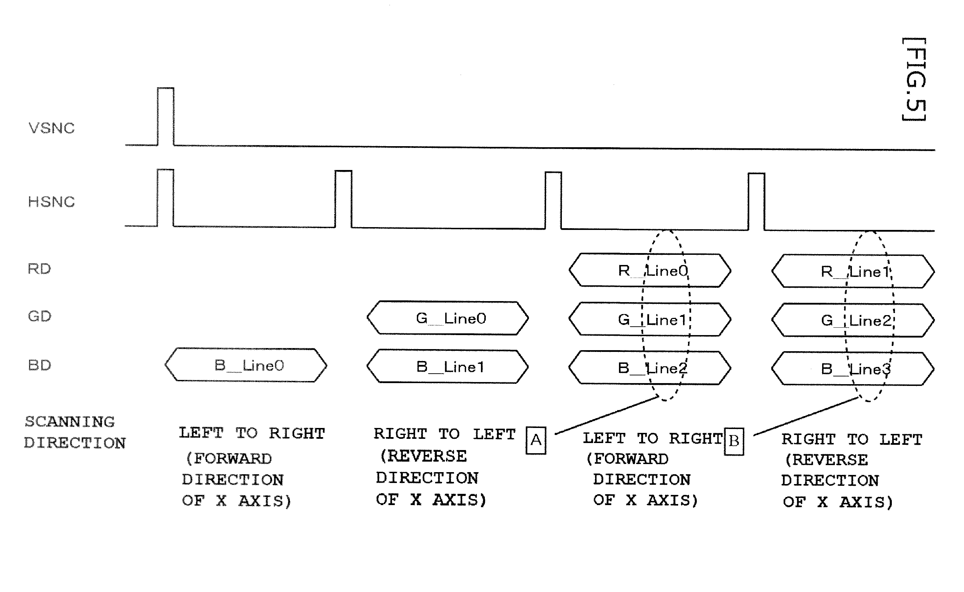

Fig. 5 is a diagram which illustrates a state in which a position deviation in the vertical direction is corrected in the pixel unit. Here, subscripts after Line in the grayscale data D (RD, GD, BD) denote a number of row (Y coordinate) on a horizontal line in the video data. Specifically, the driving current setting circuit 10c corrects a display timing of the grayscale data RD, GD, and BD of each color component using an integral multiplication in a horizontal scanning period which is defined by the horizontal synchronizing signal HSNC based on the pixel correction data which is read out from the memory 10a. When describing using the example in Fig. 3, since the projection spot B of the blue component is progressed by one horizontal line (+1 in Y direction) with respect to the projection spot G of the green component, the display timing of the grayscale data BD of the blue component is set to be earlier than that of the grayscale data GD of the green component by one horizontal scanning period. In addition, since the projection spot R of the red component is delayed by one horizontal line (-1 in Y direction) with respect to the projection spot G of the green component, the display timing of the grayscale data RD of the red component is set to be later than that of the grayscale data GD of the green component by one horizontal scanning period. In this manner, in a certain horizontal scanning period, scanning targeting a different horizontal line in each color component is concurrently performed such that the red component is R_Line0, the green component is G_Line1, and the blue component is B_Line2. In this manner, it is possible to correct the position deviation in the Y direction in terms of time when the scanning on the horizontal line which is different in each color component is performed after anticipating the position deviations in the Y direction of the projection spots R, G, and B of each color component.

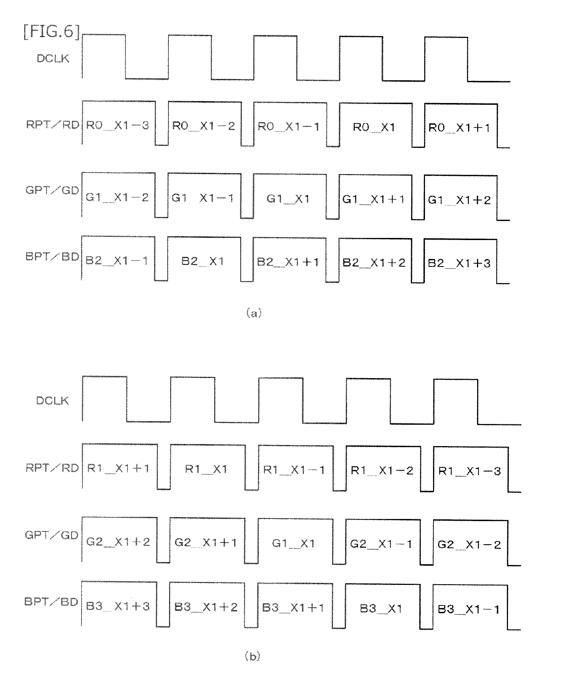

Fig. 6 is a diagram which illustrates a state in which a position deviation in the horizontal direction is corrected in the pixel unit. Here, Figs. 6(a) and 6(b) illustrate a dot clock DCLK in a period corresponding to regions A and B in Fig. 5, the waveform pattern PT (RPT, GPT, BPT), and the grayscale data D, respectively. In addition, subscripts after the RGB in the grayscale data D denote the Y coordinate in the video data, and the subscripts after the X denote the X coordinate. Specifically, when performing the forward scanning (when scanning direction is on front X axis side), the driving current setting circuit 10c corrects the display timing of the grayscale data RD, GD, and BD of each color component using an integral multiplication in the pixel display period which is defined by the dot clock DCLK based on the pixel correction data which is read out from the memory 10a. When describing using the example in Fig. 3, since the projection spot B of the blue component is delayed by one pixel with respect to the projection spot G of the green component (-1 in X direction), the display timing of the grayscale data BD of the blue component is delayed by one pixel display period compared to that of the grayscale data GD of the green component. In addition, since the projection spot R of the red component is progressed by one pixel display period with respect to the projection spot G of the green component (+1 in X direction), the display timing of the grayscale data RD of the red component is made earlier by one pixel display period than that of the grayscale data GD of the green component. In this manner, in a certain pixel display period, scanning targeting a different pixel in each color component is concurrently performed such that the red component is RO_X1-1, the green component is G1_X1, and the blue component is B2_X1+1. In this manner, it is possible to correct the position deviation in the X direction in terms of time when the scanning of a different pixel in each color component is performed after anticipating the position deviations in the X direction of the projection spots R, G, and B of each color component.

In addition, since details of a correction of position deviation in the pixel unit in the vertical direction or the horizontal direction are disclosed in Japanese Patent Application No. 2009-187225, please refer to them, if necessary.

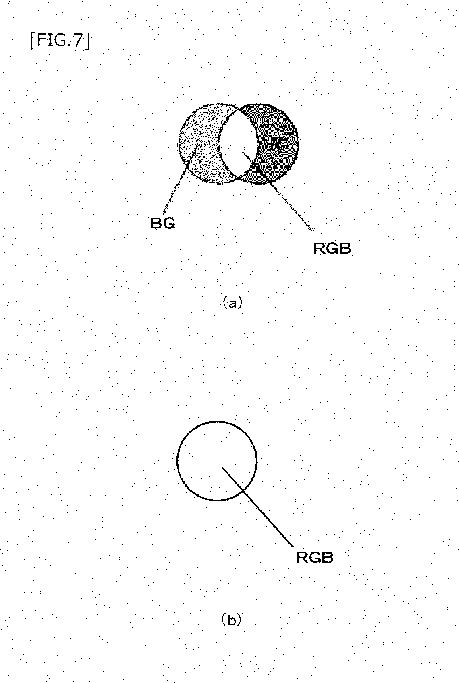

Fig. 7 is a diagram which illustrates a state of pixels which are displayed on the projection plane when performing correction of the position deviation in the pixel unit. In the example in Fig. 3, the laser light R is deviated in position by approximately 1.2 pixels in the horizontal direction X with respect to the laser light G. Accordingly, when performing the correction of the position deviation in the pixel unit, it is not possible to correct the position deviation in the sub-pixel unit in the laser light R (refer to Fig. 7(a)). Therefore, the waveform pattern setting circuit 10b sets the waveform pattern PT based on the sub-pixel correction data which is read out from the memory 10a. In this manner, the laser control unit 10 corrects the position deviation in the sub-pixel unit (refer to Fig. 7(b)).

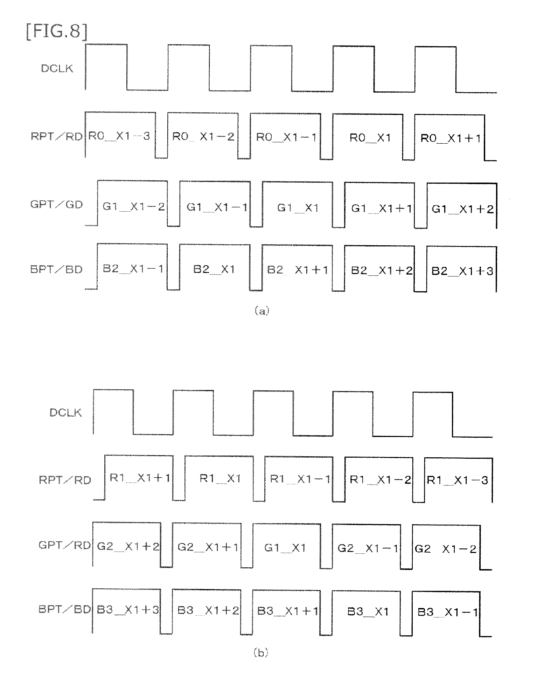

Fig. 8 is a diagram which illustrates a state in which the position deviation in the horizontal direction is corrected in the sub-pixel unit. When performing the forward scanning, the waveform pattern setting circuit 10b sets the waveform patterns GPT and BPT by reversing the waveform patterns GPT and BPT on the time axis based on the sub-pixel correction data which is read out from the memory 10a, in order to correct the position deviation in the sub-pixel unit in the laser light R. That is, the sub-pixel correction data is data denoting which waveform pattern is to be reversed among each of waveform patterns PT. Further, when performing the reverse scanning, the waveform pattern setting circuit 10b sets the waveform patterns PT when performing the forward scanning to be reversed on the time axis, respectively. In other words, when performing the reverse scanning, the waveform pattern setting circuit 10b controls an output level of the laser light R which is output from the laser light source 2c according to the waveform patterns GPT and BPT, and controls output levels of the laser light beams G and B which are output from the laser light sources 2a and 2b according to the waveform pattern RPT. In addition, according to the embodiment, a driving period of the waveform patterns PT (period from driving start timing to driving end timing of laser light source) is set to be the same. That is, since each waveform pattern PT is generated by repeating a unit period, a generation from the dot clock DCLK becomes easy, and it is advantageous in designing a circuit.

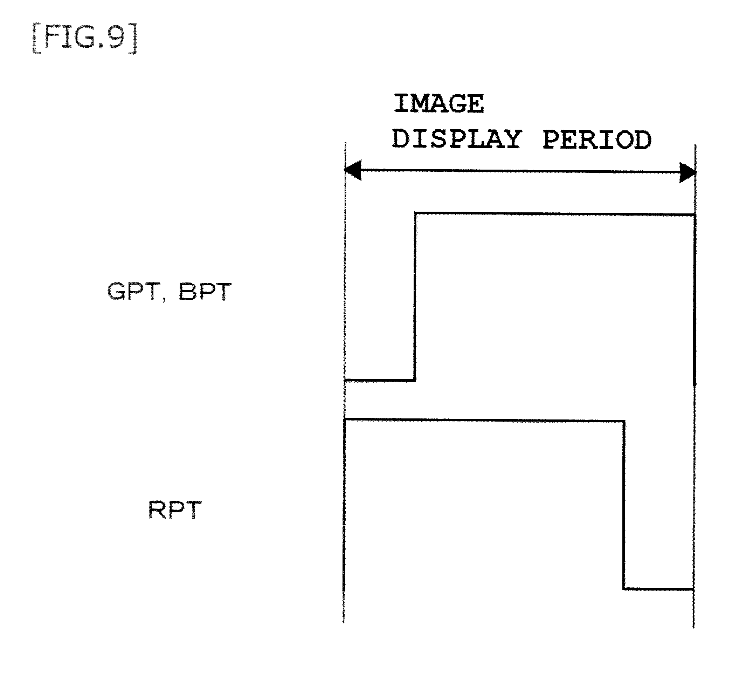

Fig. 9 is an enlarged view of a waveform pattern in the pixel display period. In addition, the above waveform pattern in Fig. 9 is waveform patterns GPT and BPT when performing the forward scanning, and the waveform pattern below is the waveform pattern RPT when performing the forward scanning. Each waveform pattern PT has the driving start timing and the driving end timing of the laser light source in the pixel display period. In addition, an OFF period from the start timing of the pixel display period to the driving start timing, and an OFF period from the driving end timing to the end timing of the pixel display period are asymmetrically set on the time axis. In addition, in the OFF periods, the driving current Id is set to bias currents or less of the laser light sources 2a to 2c, regardless of the display grayscale. In addition, the OFF period from the driving end timing to the end timing of the pixel display period means that the OFF period is included in the driving start timing in the next pixel display period, however, it also has a meaning as a blank for suppressing color mixing between the neighboring pixels. When such a waveform pattern PT is reversed on the time axis, it is possible to make the driving start timing of the laser light source early, or be delayed. Specifically, by reversing the waveform patterns GPT and BPT, when performing the forward scanning, the waveform pattern setting circuit 10b sets the driving start timing in the waveform pattern RPT earlier than those in the waveform pattern GPT and BPT. On the other hand, when performing the reverse scanning, as described above, since the waveform patterns PT is reversed on the time axis, the driving start timing in the waveform pattern RPT is set to be later than those in the waveform pattern GPT and BPT. Accordingly, the laser control unit 10 is able to correct the position deviation in the sub-pixel unit in the laser light R. In addition, according to the embodiment, since the driving period of the waveform patterns PT is set to be the same, when performing the forward scanning, the driving end timing in the waveform pattern RPT is set to be earlier than those in the waveform pattern GPT and BPT, and when performing the reverse scanning, the driving end timing in the waveform pattern RPT is set to be later than those in the waveform pattern GPT and BPT. Accordingly, even when the driving start timing of the laser light source is changed, it is possible to maintain the width of one pixel in the scanning direction, and to appropriately correct the position deviation of the projection spot.

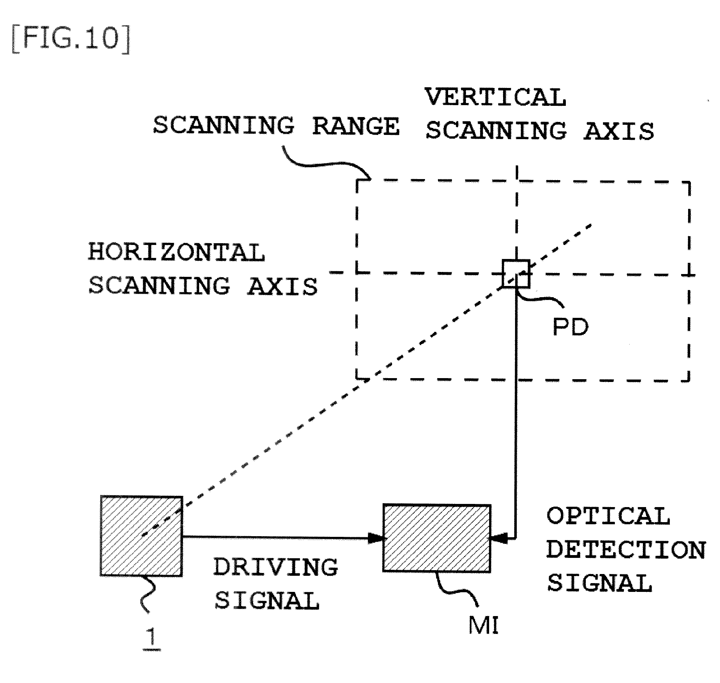

Fig. 10 is a diagram which illustrates a state in which an amount of a position deviation of a projection spot is measured. The pixel correction data, and the sub-pixel correction data which are stored in the memory 10a are determined by measuring the amount of the position deviation of the projection spot. The amount of the position deviation of the projection spot can be measured, for example, using a measuring instrument MI which measures the amount of the position deviation of the projection spot by providing an optical detector PD which detects laser light on the optical path of the laser light which is output from the laser projector 1, and based on an optical detection signal which is output from the optical detector PD, and a start signal which is output from the laser projector 1. Specifically, the laser projector 1 performs scanning in the horizontal direction X, or in the vertical direction Y so as to pass through the optical detector PD, outputs any one of the laser light beams among the RGB when the scanning mirror 6 is at a predetermined position, and outputs the start signal to the measuring instrument MI. In addition, the measuring instrument MI measures an amount of the position deviation of the projection spot by measuring a time from inputting of the start signal to detecting of the laser light in the optical detector PD.

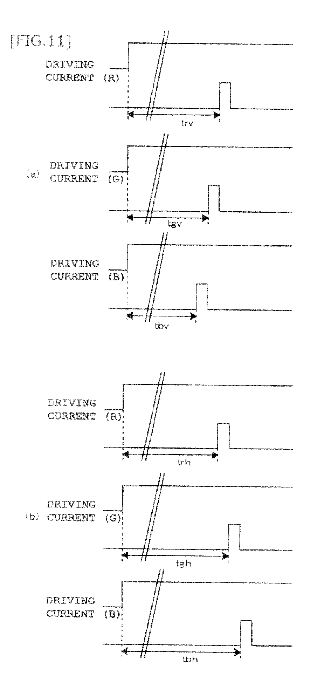

Fig. 11 is a diagram which illustrates an example of a measurement result using the measuring instrument. Here, Fig. 11(a) is a measurement result of an amount of a position deviation of each projection spot in the vertical direction Y, and Fig. 11 (b) is a measurement result of an amount of a position deviation of each projection spot in the horizontal direction X. In addition, the pixel correction data and the sub-pixel correction data are determined based on an amount of position deviation in each projection spot which is measure using the measuring instrument MI (trv, tgv, tbv, trh, tgh, tbh), and are stored in the memory 10a.

Specifically, first, an amount of position deviation in each projection spot which is measured using the measuring instrument MI is scaled in the pixel unit. Subsequently, the pixel correction data and the sub-pixel correction data are determined by calculating an amount of relative position deviation of another laser light based on any one of the laser light beams of the RGB among the laser light beams of the RGB. Here, since the correction in the sub-pixel unit is not performed with respect to the vertical direction Y, only the pixel correction data is determined by rounding off the position deviation amount using rounding off or the like. In addition, the correction is performed in the sub-pixel unit with respect to the horizontal direction X, the pixel correction data is determined by an integer part, and the sub-pixel correction data is determined by a decimal part by dividing each of the position deviation amount into the integer part and the decimal part. In addition, as described above, the sub-pixel correction data determines which waveform pattern is to be reversed among each of the waveform patterns PT. Since the correction result in the sub-pixel unit becomes different by the reversed waveform pattern PT, the sub-pixel correction data is determined so that the most effective correction can be performed based on the decimal part of the amount of each position deviation.

In this manner, according to the embodiment, the waveform pattern PT has the driving start timing, and the driving end timing in the pixel display period, the mitigation vibration of the laser light source is performed for each pixel. Since the coherency of the laser light is reduced due to the mitigation vibration, the speckle noise is reduced. In addition, the waveform pattern setting circuit 10b sets the waveform patterns GPT and BPT by reversing the waveform patterns GPT and BPT on the time axis based on the sub-pixel correction data which is read out from the memory 10a, and sets the waveform patterns PT at the time of performing the forward scanning by reversing the waveform patterns PT on the time axis when performing the reverse scanning. Accordingly, it is possible to appropriately correct the position deviation of the projection spot in both the forward scanning and reverse scanning.

### (Second Embodiment)

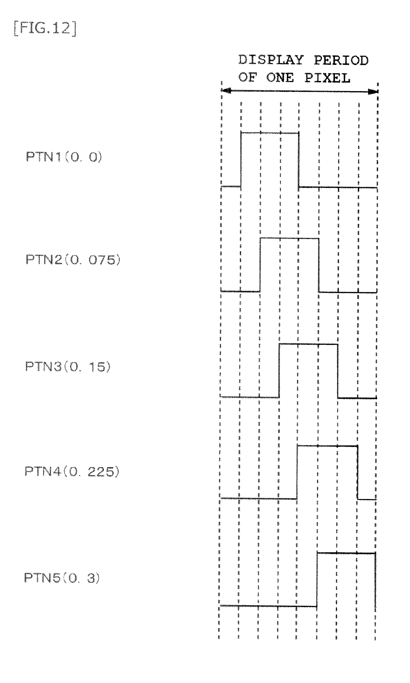

Fig. 12 is an enlarged view of a waveform pattern in a pixel display period according to the embodiment. The embodiment is characterized in that a driving start timing in a waveform pattern PT is set to be variable, and the driving start timing is caused to be stored in a memory 10a as sub-pixel correction data. In addition, since the embodiment is the same as those in the above described first embodiment other than that, descriptions thereof will be omitted.

Specifically, a waveform pattern setting circuit 10b sets the waveform pattern PT corresponding to a position deviation in the horizontal direction X based on the sub-pixel correction data which is read out from a memory 10a. For example, a waveform pattern PTN1 in the uppermost stage in Fig. 12 is a waveform pattern which has a driving start timing after 0.125 t from a rising timing of a dot clock DCLK when the pixel display period is set to t. In addition, waveform patterns PTN2 to PTN5 are waveform patterns in which driving start timings are delayed from the driving start timing of the waveform pattern PTN1 in units of 0.125 t. In addition, according to the embodiment, periods from the driving start timing to a driving end timing in the waveform patterns PTN1 to PTN5 are set to be the same, however, the driving end timing may set to be variable. Here, luminance of one pixel is determined by the product of a current level and a driving period in the pixel display period, and not only by the current level. Accordingly, when the driving periods of the waveform patterns PTN1 to PTN5 are short, the luminance of the laser light is decreased. In such a case, for example, the luminance of the laser light may be compensated by multiplying the current level of the waveform patterns PTN1 to PTN5 by a coefficient so that the product of the driving period and the current level becomes the same.

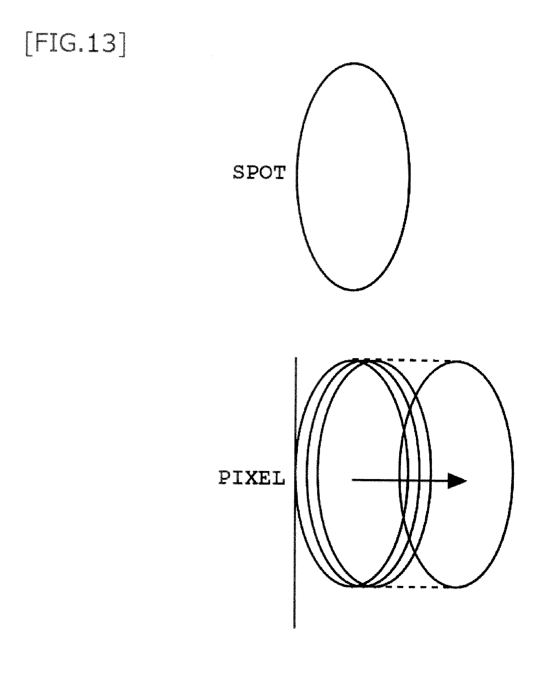

Fig. 13 is a diagram which illustrates a relationship between laser light which is displayed on a projection plane and a pixel. The laser light which is displayed on a projection plane A becomes a laser spot when scanning using a scanning mirror 6 is not performed. In addition, when scanning using the scanning mirror 6 is performed, the spot moves on the projection plane A, and becomes a pixel. Here, for example, when delays of the driving start timing of the PTNs 1 to 5 in units of 0.125 t are scaled in the pixel unit by assuming that 60% of pixels are formed through scanning using the scanning mirror 6 (40% of pixels are spots), as illustrated in parentheses in Fig. 12, it becomes units of 0.0075 pixels.

In this manner, according to the embodiment, similarly to the above described first embodiment, it is possible to effectively reduce the speckle noise. In addition to this, a laser control unit 10 is able to correct a position deviation in the sub-pixel unit in unit of 0.0075 pixels. Accordingly, it is possible to appropriately correct a position deviation of a projection spot in bi-directional sequential scanning.

In addition, in the above, described each embodiment, an example of setting a waveform pattern PT in which the ON period from a rising timing to a falling timing of only one is included in the pixel display period has been described, however, a waveform pattern PT in which the plurality of ON period are included in the pixel display period may be set. In addition, in this case, the driving start timing is the first rising timing in the pixel display period, and the driving end timing is the last falling timing in the pixel display period. In this manner, it is possible to more effectively reduce the speckle noise since it is possible to make a total time of mitigation vibration of the laser light source long.

In addition, in the above described each embodiment, the scanning mirror 6 which forms an image on the projection plane A by performing the line sequential scanning in which the scanning directions are different in even number lines and odd number lines has been set as an example of the laser scanning unit, however, the laser scanning unit may be configured using other devices than the scanning mirror. In addition, the laser scanning unit may be a unit which forms an image on the projection plane by performing scanning in which the scanning direction is different in every other line or more.

In addition, in the above described each embodiment, an example in which the waveform pattern PT is set by repeating the unit period has been described, however, as the waveform pattern PT, a waveform pattern with no periodicity may be adopted.

Further, in the above described embodiment, an image display device which displays composed light in which different color components (RGB) are composed has been described, however, the present invention is not limited to this, and can also be applied to an embodiment in which laser light beams of the same color components which are output from a plurality of laser light sources are composed.

### Industrial Applicability

As described above, the present invention can be widely applied to various image display devices which displays an image using grayscale on a projection plane (including image which is configured by one pixel) by projecting laser light on the projection plane, as is represented by a laser projector.

**Reference Signs List**

| | |
|---|---|
| 1: | LASER PROJECTOR |
| 2a TO 2c: | LASER LIGHT SOURCE |
| 3, 4: | DICHROIC MIRROR |
| 5: | LENS |
| 6: | SCANNING MIRROR |
| 7: | SCANNING MIRROR DRIVER |
| 8: | SCANNING MIRROR CONTROLLER |
| 9: | VIDEO PROCESSING UNIT |
| 10: | LASER CONTROL UNIT |
| 10a: | MEMORY |
| 10b: | DRIVING CURRENT SETTING CIRCUIT |
| 10c: | WAVEFORM PATTERN SETTING CIRCUIT |
| 11: | LASER DRIVER |

## Claims

1. An image display device which displays an image on a projection plane by projecting laser light on the projection plane, the device comprising:
a first laser light source which outputs a first laser light ;
a second laser light source which outputs a second laser light to be composed with the first laser light;
a laser scanning unit which projects the first laser light and second laser light on the projection plane by alternately repeating forward scanning, and reverse scanning which is opposite in direction to the forward scanning; and
a laser control unit which sets a driving start timing of the second laser light source of which a projection position is deviated in a scanning delay direction with respect to the first laser light source to be later than a driving start timing of the first laser light source in a pixel display period, when performing the forward scanning, and sets the driving start timing of the second laser light source of which the projection position is deviated in a scanning progress direction with respect to the first laser light source to be earlier than the driving start timing of the first laser light source in the pixel display period, when performing the reverse scanning.

2. The image display device according to claim 1,
wherein the laser control unit sets a driving end timing of the second laser light source to be later than a driving end timing of the first laser light source in the pixel display period, when performing the forward scanning, and sets the driving end timing of the second laser light source to be earlier than the driving end timing of the first laser light source in the pixel display period, when performing the reverse scanning.

3. An image display device which displays an image on a projection plane by projecting laser light on the projection plane, the device comprising:
a first laser light source which outputs a first laser light;
a second laser light source which outputs a second laser light to be composed with the first laser light;
a laser scanning unit which projects the first laser light and second laser light on the projection plane by alternately repeating forward scanning, and reverse scanning which is opposite in direction to the forward scanning; and
a laser control unit which controls an output level of the first laser light which is output from the first laser light source according to a first waveform pattern in which a first OFF period from a start timing of a pixel display period to a driving start timing of a laser light source, and a second OFF period from a driving end timing of a laser light source to an end timing of the pixel display period are asymmetrically provided on a time axis, and controls an output level of the second laser light which is output from the second laser light source according to a second waveform pattern in which the first waveform pattern is reversed on the time axis, when performing forward scanning, and controls the output level of the first laser light which is output from the first laser light source according to the second waveform pattern, and controls the output level of the second laser light which is output from the second laser light source according to the first waveform pattern, when performing the reverse scanning.

4. The image display device according to claim 3,
wherein, in the first and second OFF periods, a driving current which is supplied to the laser light source is set to a bias current or less regardless of a display grayscale.

5. The image display device according to any one of claims 1 to 4,
wherein a first driving period from the driving start timing to the driving end timing in the first laser light source is the same as a second driving period from the driving start timing to the driving end timing in the second laser light source.
